# EUROPÄISCHE PATENTSCHRIFT

(11) **EP 2 340 178 B1**
(45) Veröffentlichungstag und Bekanntmachung des Hinweises auf die Patenterteilung: **10.07.2013**
(21) Anmeldenummer: 09783924.5
(22) Anmeldetag: 12.10.2009
(51) Int. Cl.: F24F 13/065, B60H 1/34

(54) **LUFTDÜSE**
AIR NOZZLE
BUSE D AIR

(30) Priorität: 21.10.2008 DE 202008008891 U
(43) Veröffentlichungstag der Anmeldung: 06.07.2011
(73) Patentinhaber: Dr. Schneider Kunststoffwerke GmbH, 96317 Kronach (DE)
(72) Erfinder: UHLENBUSCH, Olaf, 96275 Marktzeuln (DE)
(74) Vertreter: Pröll, Jürgen
(86) Internationale Anmeldenummer: PCT/EP2009/063234
(87) Internationale Veröffentlichungsnummer: WO 2010/046253

(56) Entgegenhaltungen:
- EP-A- 0 849 104
- DE-A1-102004 019 755
- DE-B4-102005 012 538
- DE-U- 1 917 945
- DE-U- 1 929 898
- DE-U- 1 945 095
- US-A- 5 575 715

## Beschreibung

Die Erfindung betrifft eine Luftdüse zum Leiten eines Luftstroms aus einem Luftzuführschacht oder einer Luftzuführleitung in einer Heizungs-, Lüftungs- oder Klimaanlage gemäß dem Oberbegriff von Anspruch 1.

Eine derartige Luftdüse ist aus DE 10 2005 012 538 B4 bekannt. Bei dieser Luftdüse weist das Gehäuse einen Gehauseabschnitt mit kugelförmigen Wandabschnitten zur drehbaren Lagerung eines trommelförmigen Einsatzes mit außenseitigen kugelförmigen Führungselementen oder schalenförmigen Wandabschnitten auf. Im Einsatz sind Luftleitmittel vorgesehen, die derart ausgebildet und angeordnet sind, dass durch ein Verdrehen des Einsatzes in mindestens einer Drehrichtung um einen Winkel, der größer ist als der von der Luftausströmöffnung zum zentrischen fiktiven Drehpunkt des Einsatzes gebildete Winkel, mindestens zwei völlig unterschiedliche Arten von Ableitungen des Luftstroms und in den Zwischenstellungen kombinierte Ableitungen des Luftstroms gegeben sind.

Aus der DE 10 2004 019 755 A1 ist eine Luftdüse zum Einbau in ein Kraftfahrzeug mit einem sphärisch geformten Düsenkopf mit Ausströmöffnungen bekannt, der in einem Gehäuse dreh- und schwenkbar gelagert ist. Um eine verbesserte Lagerung des Düsenkopfes zu erzielen, sind Federelemente als Lagerstellen vorgesehen. Die Federelemente sind Federarme, die mit Anformungen in Vertiefungen am Düsenkopf eingreifen, um eine individuelle Verstellung abzusichern. Bedingt durch die Lagerung ist sowohl eine Flächenreibung zwischen den Federelementen und der Oberfläche des kugelförmigen Düseneinsatzes gegeben als auch eine Reibung an der Gehäusefläche, insbesondere an dem Bund, an dem die Federelemente befestigt sind.

Aus der DE 1 917 945 U ist eine kugelförmige Luftdüse bekannt, die mit einer Kugelpfanne mit kreisrundem Ausschnitt dreh- und verschwenkbar gelagert ist. Die Kugelpfanne besteht aus einem kanalseitigen Kugelsegmentring mit Bremsfederzungen und einem unter Beilage eines Dichtungsringes verbundenen Kugelsegmentrings. Der Kugelkopf liegt an der Wand der Kugelpfanne bei gleichzeitiger Wirkung der sich über Kugelabschnitte erstreckenden Bremsfederzungen an.

Aus der DE 1 945 095 U ist ein als Kugellüfter ausgebildeter Luftauslass nach dem Oberbegriff des Anspruchs 1 für Deckenluftkanäle insbesondere in Omnibussen bekannt, der einen auseinanderstrebenden Luftstrahl ergibt, der etwa eine glockenförmige Gestalt aufweist und eine örtliche Zugerscheinung vermeidet. Der verschwenkbare kugelförmige Einsatz ist in einer Durchtrittsöffnung mittels zweier Lagerstellen verschwenkbar gelagert, wobei die eine Lagerstelle aus einer Abdeckscheibe besteht, die von einer Brückenfeder gehalten ist, deren Enden von Halteteilen gehalten werden, die im Gehäuse fixiert sind. Die Feder ist so vorgespannt, dass sich der kugelförmige Ansatz durch fahrtbedingte Erschütterungen nicht selbstständig zu verdrehen vermag. Die Montage einer solchen Anordnung erfordert viel Geschick und ist aufwendig.

Aus der DE 1 929 898 U ist eine Luftführungsdüse zur Belüftung des Innenraumes von Fahrzeugen mit einem die Kugeldüse aufnehmenden, aus einem Tragring und einen gegen diesen federbelastenden sowie über Stützstege in diesen eingreifenden und hieran befestigten Druckring bestehenden Lagerring bekannt. Um jedes der den Druckring mit dem Lagerring verbindenden Verbindungsglieder ist eine Spiraldruckfeder gewickelt, die sich mit einem Ende am Befestigungsflansch des Druckringstützsteges und mit dem anderen Ende an einem gegenüber diesen vorstehenden Ring des Verbindungsgliedes abstützt. Die hier vorgesehenen Druckringe halten zwar den kugelförmigen Einsatz, sind aber außerordentlich kompliziert aufgebaut und müssen an den entsprechenden Stellen angenietet werden. Die Reibfläche ist über den Druckring darüber hinaus sehr groß.

Aufgabe der Erfindung ist es, eine Luftdüse mit den im Oberbegriff des Anspruchs 1 angegebenen Merkmalen so auszubilden, dass eine verbesserte Abstützung des Einsatzes im Gehäuse und eine stabile Lagefixierung von Einsatz und Gehäuse zueinander unter Minimierung der Lagerreibung erzielt und eine einfache Montage ermöglicht wird, wobei zwischen der Gehäusewand und dem Einsatz ein Luftspalt gegeben ist.

Diese Aufgabe wird durch eine Luftdüse mit den Merkmalen gemäß Anspruch 1 gelöst. Vorteilhafte Ausgestaltungen sind Gegenstand abhängiger Ansprüche, deren Merkmale im Ausführungsbeispiel näher erläutert werden.

Bei einer erfindungsgemäß ausgestalteten Luftdüse weist der Einsatz eine zumindest abschnittsweise kugelförmige Außenfläche auf und ist über mindestens drei konturenangepasste Lagerstellen an der Innenfläche des Gehäuses abgestützt, wobei mindestens einer Lagerstelle ein Federelement zugeordnet ist. Dabei wird eine federnde Abstützung eines Düseneinsatzes über eine kugelförmige Kontur in einem Düsengehäuse erzielt. Gegenüber einer kardanischen Aufhängung hat die Aufhängung bzw. Abstützung über kugelförmige Abschnitte den Vorteil, dass ein Ruckeln vermieden wird, es treten keine unterschiedlichen Kräfte auf und es gibt keine Totpunkte im Bewegungsablauf. Folglich werden eine intuitive Betätigung und eine hohe Betätigungsanmut erreicht. Durch die Federunterstützung lassen sich konstante Drehmomente erzielen und das Abstützsystem ist temperaturunabhängig. Konventionelle Kunststofffedern würden "fließen", d.h., bei derartigen Bauteilen würde sich mit zunehmender Nutzungsdauer ihre Spannkraft vermindern.

Die Lagerung muss mindestens als eine Dreipunktlagerung ausgebildet werden, wobei mindestens eine der drei Lagerstellen mittels einer Feder unterstützt sein sollte, um ein Aushüpfen der Kugel zu vermeiden. In weiterer Ausgestaltung kann auch eine Vierpunktlagerung vorgesehen sein, wobei dann vorteilhafterweise zwei Lagerstellen mittels einer Feder unterstützt sein sollten. Weitere Ausgestaltungen mit fünf und mehr Lagerstellen sind ebenfalls möglich. Allerdings erhöht sich dann zwangsläufig der Aufwand. Deshalb sind für zahlreiche Anwendungen, insbesondere bei der bevorzugten Nutzung für Fahrgasträume von Kraftfahrzeugen, primär Varianten mit lediglich drei oder vier Lagerstellen sinnvoll.

Die Lagerstellen können in einer einfachen Form rippenförmig oder in einer besonders vorteilhaften Variante U-förmig ausgestaltet werden, wobei die Stirnflächen der Oberfläche des Einsatzes angepasst bogenförmig ausgeführt sind und relativ kleine Lagerflächen bilden.

Als die Lagerstelle oder eine Lagerwand hintergreifende Feder kann beispielsweise eine Blattfeder oder eine Druckfeder verwendet werden. Die jeweilige Feder kann auf eine Kunststoffzunge der Lagerstelle drücken. Dabei wird eine sehr gute Betätigungsanmut erzielt, da Kunststoff gegenüber Kunststoff gleitet. Ebenso kann die jeweilige Feder auch frei aufgehängt sein, z. B. kann eine Metallfeder gegen die Kunststoffkugel drücken, wobei die Lagerwand an die Oberfläche des Einsatzes gedrückt wird.

Der funktionell als Luftleitelement wirkende Einsatz weist in einer Vorzugsvariante einen Kugelabschnitt auf und ist innen hohl. An den stirnseitigen Endabschnitten kann beispielsweise ein zylindrischer Bund angebracht werden, der als Anschlag wirksam wird und somit den möglichen Stellbereich der Relativbewegung von Gehäuse und Einsatz begrenzt.

Die Lagerstelle selbst kann beispielsweise auch als hohlkastenförmiges Gebilde angespritzt sein, wobei das vorstehend vorgesehene kleine Lager-Flächenelement an der Oberfläche des kugelförmigen Körpers des Einsatzes mit einer konturenangepassten Lagerfläche anliegt. Dieses Flächenelement kann bei mindestens einer der Lagerstellen auch als federndes Element ausgebildet sein, das von einer Druckfeder oder Blattfeder hintergriffen wird, die sich an der Gehäusewand der Luftdüse abstützt oder an dem Boden der Lagerstelle bzw. des hohlkastenförmigen Gebildes. Dadurch wird die das federnde Element bildende zungenförmige Wand unter Aufbringung der Federkraft gegen die kugelförmige Außenfläche des Einsatzes gedrückt. Die Lagerung kann auch durch eine schwenkbeweglich angeordnete Lagerstelle realisiert sein, die von einer Feder abgestützt wird. Hier bieten sich diverse Ausgestaltungsmöglichkeiten an. Ebenso ist es möglich, in der Gehäusefläche eine Teilfläche oder eine zungenförmige Teilfläche freizuschneiden, die von einer Feder hintergriffen wird, um sie unter Federspannung und unter geringer Reibung an den kugelförmigen Außenflächen am Einsatz anzudrücken, wodurch eine gleichförmige Anlage an den Lagerflächen aller Lagerstellen sichergestellt ist.

Wenn die Außenflächen des Einsatzes Rippen aufweisen, um darüber Luft durchlassen zu können, ist ersichtlich, dass auch hier die Erfindung zur Anwendung kommen kann, da die Teile der Lagerstelle, die von der Federung ergriffen werden, angedrückt werden. Allerdings ist die Anlageflache der Lagerstelle dann wesentlich zu vergrößern, damit immer eine Rippenaußenfläche anliegt. Die Lageranordnung und Breite des Bogens und/oder die Neigung gegenüber der Längsachse des Düsengehäuses müssen dabei so aufeinander abgestimmt sein, dass der Bogen nicht in den Zwischenraum zweier Rippen beim Verschwenken des Einsatzes gelangen kann.

Nachfolgend werden Ausführungsbeispiele der Erfindung beschrieben, die in den Zeichnungen dargestellt sind. Es zeigen:
- Fig. 1: eine Luftdüse in Schnittdarstellung in einer ersten Ausführung der Erfindung,
- Fig. 2: die Luftdüse gemäß Fig. 1 bei einer anderen Stellung des Einsatzes,
- Fig. 3: die Luftdüse gemäß Fig. 1 in perspektivischer Ansicht,
- Fig. 4: eine Luftdüse in Schnittdarstellung in einer zweiten Ausführung der Erfindung,
- Fig. 5: die Luftdüse gemäß Fig. 4 in perspektivischer Ansicht,
- Fig. 6: eine erste Variante der Ausgestaltung einer Lagerstelle,
- Fig. 7: eine modifizierte Variante der Ausgestaltung einer Lagerstelle,
- Fig. 8: eine weitere modifizierte Variante der Ausgestaltung einer Lagerstelle,
- Fig. 9: eine zweite Variante der Ausgestaltung einer Lagerstelle,
- Fig. 10: eine Luftdüse in Schnittdarstellung in einer weiteren Ausführung der Erfindung,
- Fig. 11: einen Schnitt entlang der Linie B-B der Luftdüse gemäß Fig. 10,
- Fig. 12: die Luftdüse gemäß Fig. 10 in perspektivischer Ansicht,
- Fig. 13: die Luftdüse gemäß Fig. 10 bei einer anderen Stellung des Einsatzes,
- Fig. 14: die Luftdüse gemäß Fig. 13 in perspektivischer Ansicht,
- Fig. 15: eine Explosionsdarstellung der Luftdüse gemäß Fig. 10 bis Fig. 14,
- Fig. 16: eine Luftdüse in Schnittdarstellung in einer weiteren Ausführung der Erfindung,
- Fig. 17: einen Schnitt entlang der Linie C-C der Luftdüse gemäß Fig. 16,
- Fig. 18: die Luftdüse gemäß Fig. 16 in perspektivischer Ansicht,
- Fig. 19: die Luftdüse gemäß Fig. 16 bei einer anderen Stellung des Einsatzes,
- Fig. 20: die Luftdüse gemäß Fig. 19 in perspektivischer Ansicht,
- Fig. 21: eine Explosionsdarstellung der Luftdüse gemäß Fig. 16 bis Fig. 20,
- Fig. 22: eine Luftdüse in Schnittdarstellung in einer weiteren Ausführung der Erfindung,
- Fig. 23: einen Schnitt entlang der Linie B-B der Luftdüse gemäß Fig. 22,
- Fig. 24: die Luftdüse gemäß Fig. 22 in Vorderansicht,
- Fig. 25: die Luftdüse gemäß Fig. 22 in perspektivischer Ansicht,
- Fig. 26: die Luftdüse gemäß Fig. 22 bei einer anderen Stellung des Einsatzes,
- Fig. 27: die Luftdüse gemäß Fig. 26 in perspektivischer Ansicht und
- Fig. 28: eine Explosionsdarstellung der Luftdüse gemäß Fig. 22 bis Fig. 27.

Die in den Zeichnungen dargestellten Luftdüsen sind zum Leiten eines Luftstroms aus einem Luftzuführschacht oder einer Luftzuführleitung in einer Heizungs-, Lüftungs- oder Klimaanlage geeignet. Eine diesbezügliche Anwendung ist beispielsweise der Einsatz in einem Fahrgastraum in einem Kraftfahrzeug. Solche Luftdüsen können auch in Luftfahrzeugen, in Kabinen in Wasserfahrzeugen oder in stationären Räumen sowie anderen Räumen eingesetzt werden.

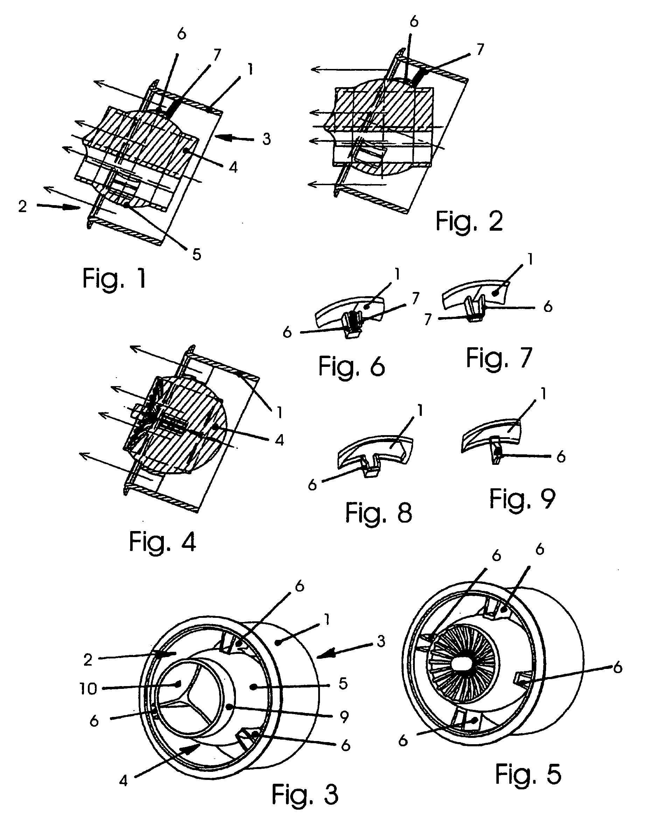

Die Luftdüse nach den Fig. 1 bis 5 besteht aus einem hohlzylindrischen Gehäuse 1 mit einer vorderseitigen Luftausströmöffnung 2 und einer rückseitigen Lufteinströmöffnung 3.

Im Gehäuse 1 ist ein Einsatz 4 gelagert, mit dem die Richtung und/oder die Intensität des aus der Luftdüse austretenden Luftstroms verändert werden kann. Der Einsatz 4 weist zumindest abschnittsweise eine kugelförmige Außenfläche 5 auf und ist über mindestens drei konturenangepasste Lagerstellen 6 an der Innenfläche des Gehäuses 1 abgestützt. Einer dieser Lagerstellen 6 ist ein Federelement 7 zugeordnet.

Fig. 1 bis Fig. 3 zeigen eine Ausgestaltung, bei welcher der Einsatz 4 über drei Lagerstellen 6 an der Innenfläche des Gehäuses 1 abgestützt ist. Gemäß Fig. 1 und Fig. 2 ist einer Lagerstelle 6 ein Federelement 7 zugeordnet. Die Lagerwand, die eine der äußeren Kontur der kugelförmigen Außenfläche 5 angepasste Lagerfläche aufweist, ist als einseitig an der Lagerstelle befestigte Lagerwand ausgebildet, die von einem Federelement 7, einer Druckfeder, hintergriffen wird, die ihrerseits an dem Düsengehäuse abgestützt ist. Die Druckfeder 7 drückt die Lagerwand gegen die Außenfläche 5 des Einsatzes 4, so dass unter Druckverteilung auf die Lagerstellen 6 die Außenfläche auch mit ihren Lagerflächen an den weiteren Lagerstellen 6 anliegt und durch die Kugelform in verschiedene Richtungen verschwenkt werden kann. Die Lagerstelle 6 selbst weist eine Rippenstruktur auf. Die Lagerwand ist an den Enden an den an der Innenfläche des Gehäuses 1 befestigten Rippen fixiert. Mindestens die eine Lagerwand ist dabei so ausgebildet, dass sie von einer Feder 7 hintergriffen und unter Federdruck an der Außenfläche 5 des kugelförmigen Körpers des Einsatzes 4 anliegt. Es ist offensichtlich, dass durch diese Feder 7 ein leichtes Einsetzen des Einsatzes bei der Montage ermöglicht wird, dass andererseits aber auch eine definierte Federkraft als Reibkraft auf die Außenfläche 5 wirkt und so eine gewünschte Andruckkraft an die Außenfläche 5 des kugelförmigen Einsatzes 4 einstellbar ist.

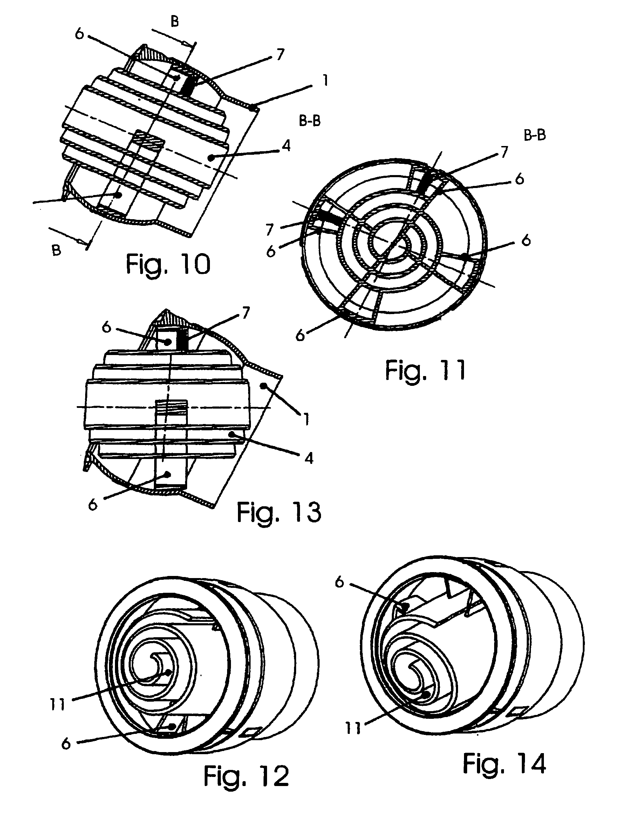

Fig. 4 und Fig. 5 zeigen eine Ausgestaltung, bei welcher der Einsatz 4 über vier Lagerstellen 6 an der Innenfläche des Gehäuses 1 abgestützt ist. Hierbei ist vorzugsweise zwei dieser Lagerstellen 6 jeweils ein Federelement 7 zugeordnet. Weitere Konstruktionen mit jeweils vier Lagerstellen 6 sind aus Fig. 10 bis Fig. 15 ersichtlich.

Die Lagerstellen 6 können an der Innenfläche des Gehäuses 1 und radial zum Einsatz 4 gerichtet ausgestaltet werden. Die Lagerstellen 6 selbst können an der Innenseite der Gehäusewand angeklebt oder angeschweißt oder auch, wenn sie ebenfalls aus Kunststoff bestehen, angeformt sein. Diesbezügliche Details sind in Fig. 5 bis Fig. 9 dargestellt. Dabei zeigen Fig. 5 bis Fig. 6 Lagerstellen 6 mit einer U-förmigen Kontur in verschiedenen Varianten. Fig. 6 zeigt eine Lagerstelle 6 mit einer Feder 7, die eine vorderseitige Lagerwand hintergreift, wie sie in den Fig. 1 bis 3 zur Anwendung kommt. Fig. 7 zeigt eine Ausführungsform, bei der die Lagerwand, die mit ihrer konturenangepassten Lagerfläche an der Außenseite 5 des Einsatzes 4 anliegt, selbst als federndes Teil ausgebildet ist und Zungenform besitzt. Das Widerlager der federnden Lagerwand bilden die hinteren Seiten der beiden Rippen der Lagerstelle 6. Die Lagerstellen 6 können aber auch, wie aus den Fig. 8 und 9 ersichtlich ist, an Freischnitten in der Gehäusewand angeformt sein. Die freigeschnittenen Gehäusewandteile stellen dabei die Federung sicher. Die Lagerstelle 6 kann, wie aus Fig. 9 ersichtlich, auch aus zwei dicht aneinanderliegenden Stegen bestehen oder aber auch aus einem einzigen Steg bzw. einer einzigen Rippe.

Alternativ zur Anordnung an der Innenfläche des Gehäuses 1 können die Lagerstellen 6 ebenfalls an der Außenfläche vom Einsatz 4 angeordnet werden. Die Lagerstellen 6 sind dann radial zum Gehäuse 1 gerichtet, wobei alternativ auch hier Ausführungen mit einer U-förmigen oder einer rippenförmigen Kontur möglich sind. Fig. 10 bis Fig. 15 zeigen eine entsprechende Ausführung mit U-förmigen Lagerstellen 6.

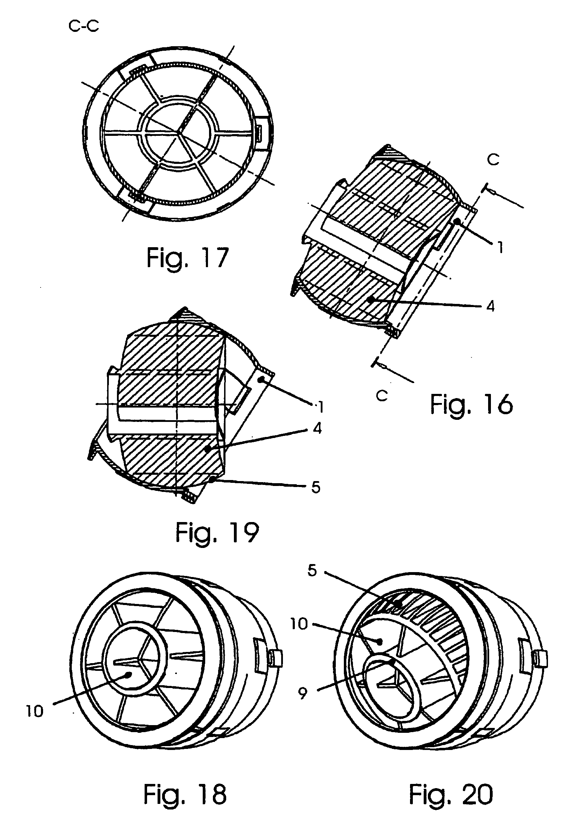

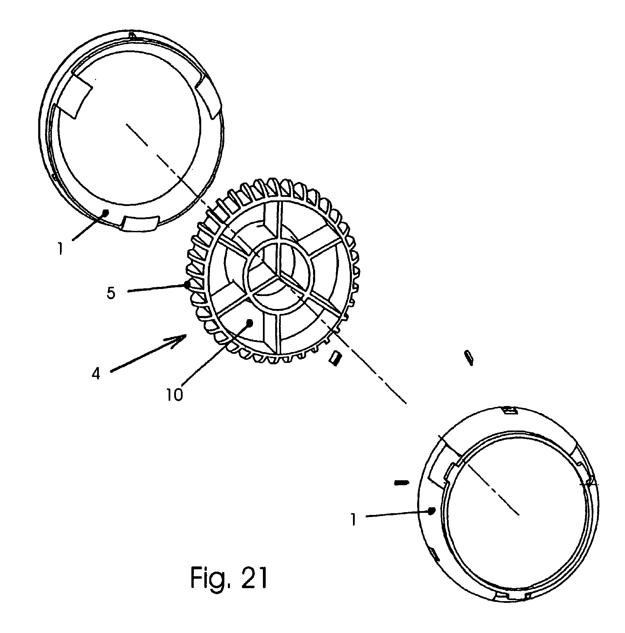

Weiterhin sind aus Fig. 16 bis Fig. 21 Ausführungen ersichtlich, bei denen am Umfang des Einsatzes 4 eine Vielzahl von kugelförmigen Außenflächen 5 vorgesehen ist, die hier rippenähnlich ausgestaltet sind.

Unabhängig von der konkreten Anordnung und Ausgestaltung ist zumindest einer der Lagerstellen 6 ein Federelement 7 zugeordnet. Das Federelement 7 kann eine Kunststoffzunge beaufschlagen oder auch frei aufgehängt werden. Außerdem kann das Federelement 7 als eine Blattfeder oder eine Druckfeder ausgestaltet werden.

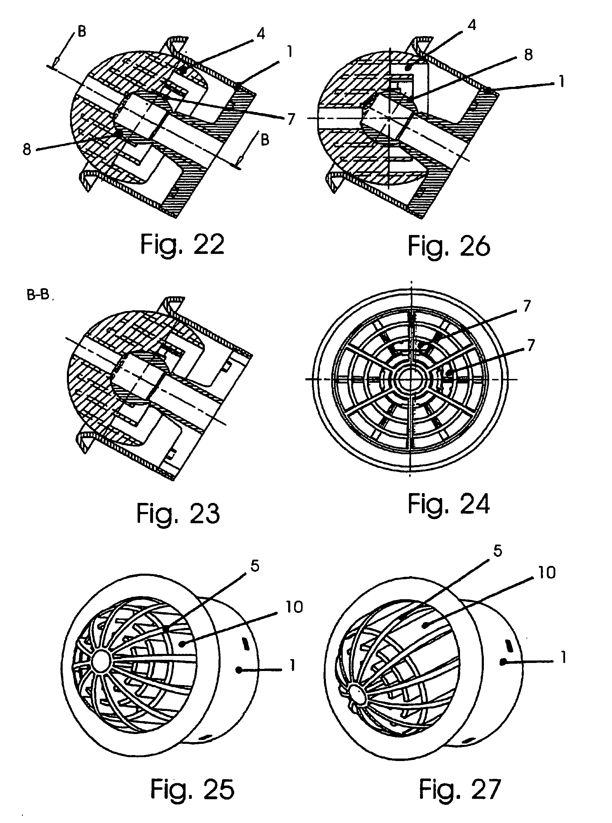

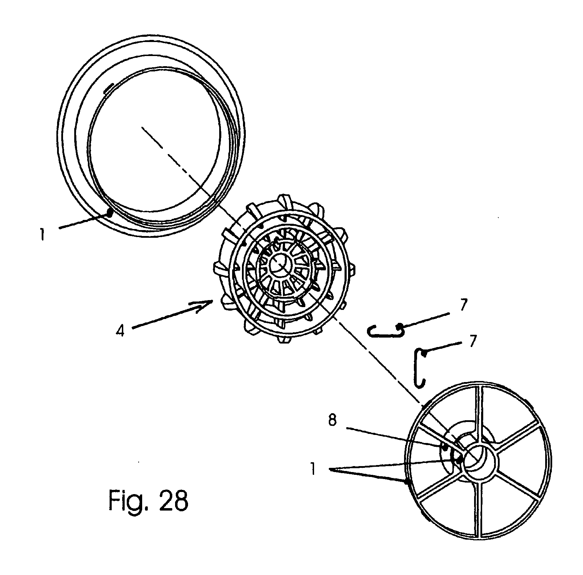

Fig. 22 bis Fig. 28 zeigen eine Luftdüse, bei der eine Lagerstelle im Innenraum des Gehäuses 1 angeordnet ist. Diese Lagerstelle ist axial zur Mittellängsachse des Gehäuses 1 gerichtet. Dabei wird eine wirksame Abstützung erreicht, indem am Gehäuse 1 und am Einsatz 4 jeweils teilkugelförmige und zueinander kongruente Abschnitte 8 ausgestaltet sind, die funktionell als Lagerstelle wirken. Dabei ist im Übergangsbereich der beiden teilkugelförmigen Abschnitte 8 von Gehäuse 1 und Einsatz 4 mindestens ein Federelement 7 angeordnet.

Der Einsatz 4 weist an seiner Außenfläche stets einen Abschnitt mit einer kugelförmigen Oberfläche 5 auf. Gemäß Fig. 1 bis Fig. 3 ist beispielsweise lediglich ein kreisringförmiger Abschnitt mit kugelförmiger Oberfläche 5 vorgesehen. Hingegen ist der Einsatz 4 gemäß Fig. 22 bis Fig. 28 beispielsweise an seiner Außenfläche auf einer Größe von etwa einer Dreiviertelkugel mit einer kugelförmigen Oberfläche 5 ausgestaltet, die hier rippenähnlich verläuft. Zwischen diesen Varianten mit Kreisring und Dreiviertelkugel sind zahlreiche weitere Abstufungen mit einer jeweils unterschiedlich großen kugelförmigen Oberfläche 5 möglich.

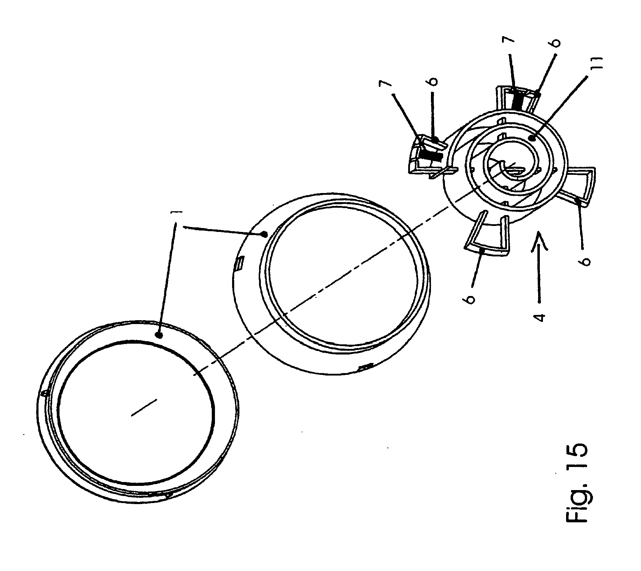

Das Gehäuse 1 und der Einsatz 4 können verschiedenartig weiter ausgestaltet werden. So kann das Gehäuse 1 als ein baueinheitliches Spritzgussteil hergestellt werden. Alternativ ist es möglich, das Gehäuse 1 aus mehreren separaten Einzelteilen zusammenzufügen, beispielsweise mittels einer Schnappverbindung. Diesbezügliche Varianten sind insbesondere aus den Explosionsdarstellungen gemäß Fig. 15, Fig. 21 und Fig. 28 ersichtlich.

Am Einsatz 4 kann an den zur Luftausströmöffnung 2 und/oder Lufteinströmöffnung 3 gerichteten Endabschnitten jeweils ein zylindrischer Bund 9 vorgesehen werden. Diesbezügliche Details sind beispielsweise aus Fig. 3 und Fig. 20 ersichtlich.

Weiterhin kann der Einsatz 4 eine Vielzahl von separaten und jeweils in Längsrichtung des Einsatzes 4 verlaufenden Strömungskanälen 10 aufweisen, wie dies beispielsweise aus Fig. 3, Fig. 5, Fig. 18 und Fig. 25 ersichtlich ist. Anstelle solcher Strömungskanäle 10 kann der Einsatz 4 gemäß Fig. 14 und Fig. 15 mit einem um seine Längsachse spiralförmig umlaufenden Strömungskanal 11 ausgestaltet werden.

**Bezugszeichenliste**

| | |
|---|---|
| 1 | Gehäuse |
| 2 | Luftausströmöffnung |
| 3 | Lufteinströmöffnung |
| 4 | Einsatz |
| 5 | kugelförmige Außenfläche am Einsatz |
| 6 | Lagerstelle |
| 7 | Federelement |
| 8 | teilkugelförmiger Lagerabschnitt |
| 9 | zylindrischer Bund am Einsatz |
| 10 | längs gerichteter Strömungskanal am Einsatz |
| 11 | spiralförmiger Strömungskanal am Einsatz |

## Patentansprüche

1. Luftdüse zum Leiten eines Luftstroms aus einem Luftzuführschacht oder einer Luftzuführleitung in einer Heizungs-, Lüftungs- oder Klimaanlage, insbesondere für Fahrgasträume in Kraftfahrzeugen, bestehend aus einem hohlzylindrischen Gehäuse mit einer vorderseitigen Luftausströmöffnung und einer rückseitigen Lufteinströmöffnung sowie einem im Gehäuse gelagerten Einsatz, der eine zumindest abschnittsweise kugelförmige Außenfläche (5) aufweist und über konturenangepasste Lagerstellen (6) abgestützt ist und mit dem die Richtung und/oder die Intensität des aus der Luftdüse austretenden Luftstroms veränderbar ist, **dadurch gekennzeichnet, dass** der Einsatz (4) über drei, vier oder mehrere Lagerstellen (6) mit konturenangepassten Lagerflächen an der Innenfläche des Gehäuses (1) abgestützt ist, dass die Lagerstellen (6) an der Innenfläche des Gehäuses (1) vorstehend angeordnet und radial zum Einsatz (4) gerichtet ausgestaltet sind und eine rippenförmige Kontur aufweisen und dass mindestens eine Lagerstelle (6) eine verschwenkbar oder verschiebbar gelagerte Lagerwand mit Lagerfläche aufweist, die von einem Federelement hintergriffen ist.

2. Luftdüse nach Anspruch 1, **dadurch gekennzeichnet, dass** das Federelement (7) eine Kunststoffzunge an einer Lagerstelle beaufschlagt.

3. Luftdüse nach Anspruch 1 oder 2, **dadurch gekennzeichnet, dass** das Federelement (7) frei aufgehängt ist.

4. Luftdüse nach Anspruch 1 oder 2, **dadurch gekennzeichnet, dass** das Federelement (7) als Blattfeder oder Druckfeder ausgestaltet ist.

5. Luftdüse nach Anspruch 1, dadurch ge - kennzeichnet, dass die Lagerstellen (6) im Innenraum des Gehäuses (1) angeordnet und axial zur Mittellängsachse des Gehäuses (1) gerichtet ausgestaltet sind.

6. Luftdüse nach Anspruch 5, dadurch gekennz e i c h n e t , dass am Gehäuse (1) und am Einsatz (4) jeweils teilkugelförmige, zueinander kongruente Abschnitte (8) ausgestaltet sind oder dass der Einsatz (4) an seiner Außenfläche einen kreisringförmigen Abschnitt mit einer kugelförmigen Oberfläche (5) aufweist.

7. Luftdüse nach Anspruch 6, da d u r c h gekennz e i c h n e t , dass im Übergangsbereich der teilkugelförmigen Abschnitte (8) von Gehäuse (1) und Einsatz (4) mindestens ein Federelement (7) angeordnet ist.

8. Luftdüse nach Anspruch 1, **dadurch gekennzeichnet, dass** der Einsatz (4) an seiner Außenfläche eine kugelförmige Oberfläche (5) aufweist, deren Größe etwa einer Dreiviertelkugel entspricht.

9. Luftdüse nach Anspruch 1, dadurch ge kennzeichnet, dass der Einsatz (4) an seinem zur Luftausströmöffnung (2) und/oder zur Lufteinströmöffnung (3) gerichteten Endabschnitt einen zylindrischen Bund (9) aufweist.

10. Luftdüse nach Anspruche 1, **dadurch gekennzeichnet, dass** der Einsatz (4) eine Vielzahl von separaten und jeweils in Längsrichtung des Einsatzes (4) verlaufenden Strömungskanälen (10) aufweist.

11. Luftdüse nach Anspruch 1, **dadurch gekennzeichnet, dass** der Einsatz (4) einen um seine Längsachse spiralförmig umlaufenden Strömungskanal (11) aufweist.

## Claims

1. Air nozzle for guiding an air flow from an air feed shaft or an air feed duct in a heating, ventilating or air-conditioning installation, particularly for passenger compartments in motor vehicles, consisting of a hollow-cylindrical housing with an air outflow opening at the front side and an air inflow opening at the rear side as well as an insert, which is mounted in the housing and has an outer surface (5) spherical at least in a section and which is supported by way of bearing locations (6) of matched profile and by which the direction and/or the intensity of the air flow issuing from the air nozzle is variable, **characterised in that** the insert (4) is supported by way of three, four or more bearing locations (6) with bearing surfaces, which are matched in profile, on the inner surface of the housing (1), that the bearing locations (6) are arranged at the inner surface of the housing (1) to protrude and formed to be directed radially with respect to the insert (4) and have a rib-shaped profile and that at least one bearing location (6) has a pivotably or displaceably mounted bearing wall with a bearing surface behind which a spring element engages.

2. Air nozzle according to claim 1, **characterised in that** the spring element (7) acts on a plastics material tongue at a bearing location.

3. Air nozzle according to claim 1 or 2, **characterised in that** the spring element (7) is freely suspended.

4. Air nozzle according to claim 1 or 2, **characterised in that** the spring element (7) is formed as a leaf spring or compression spring.

5. Air nozzle according to claim 1, **characterised in that** the bearing locations (6) are arranged in the interior space of the housing (1) and formed to be oriented axially to the centre longitudinal axis of the housing (1).

6. Air nozzle according to claim 5, **characterised in that** respective part-spherical, mutually congruent sections (8) are formed at the housing (1) and at the insert (4) or that the insert (4) has at the outer surface thereof an annular section with a spherical surface (5).

7. Air nozzle according to claim 6, **characterised in that** at least one spring element (7) is arranged in the transition region of the part-spherical sections (8) of housing (1) and insert (4).

8. Air nozzle according to claim 1, **characterised in that** the insert (4) has at the outer surface thereof a spherical surface (5) approximately corresponding in size with three-quarters of a sphere.

9. Air nozzle according to claim 1, **characterised in that** the insert (4) has a cylindrical collar (9) at its end section directed towards the air outflow opening (2) and/or the air inflow opening (3).

10. Air nozzle according to claim 1, **characterised in that** the insert (4) has a plurality of separate flow channels (10) respectively extending in longitudinal direction of the insert (4).

11. Air nozzle according to claim 1, **characterised in that** the insert (4) has a flow channel (11) running spirally around its longitudinal axis.

## Revendications

1. Buse d'air pour diriger un flux d'air à partir d'une trémie d'alimentation en air ou d'un tuyau d'alimentation en air dans une installation de chauffage, de ventilation ou de climatisation, notamment pour les compartiments de voyageur dans les véhicules, composée d'un boîtier cylindrique creux avec une ouverture de sortie d'air sur le devant et d'une ouverture d'entrée de l'air sur l'arrière ainsi qu'un insert monté dans le boîtier qui présente une surface extérieure (5) au moins partiellement sphérique et repose sur des points d'appui (6) adaptés aux contours et avec lequel la direction et/ou l'intensité du flux d'air sortant de la buse peuvent être modifiées, caractérisée en cela que l'insert (4) est appuyé sur trois, quatre ou plusieurs points d'appui (6) avec des surfaces d'appui adaptées aux contours sur la surface intérieure du boîtier (1), que les surfaces d'appui (6) soient situées en saillie contre la surface intérieure du boîtier (1) et soient orientées de manière radiale à l'insert (4) et présentent un contour en forme de côtés et qu'au moins un point d'appui (6) présente une paroi d'appui qui peut basculer ou coulisser avec une surface d'appui qui est engagée par un élément à ressort.

2. Buse d'air selon la revendication 1 caractérisée en cela que l'élément à ressort (7) met sous pression une languette en plastique sur un point d'appui.

3. Buse d'air selon la revendication 1 ou 2 caractérisée en cela que l'élément à ressort (7) est suspendu librement.

4. Buse d'air selon la revendication 1 ou 2 caractérisée en cela que l'élément à ressort (7) est constitué d'un ressort à lames ou d'un ressort de compression.

5. Buse d'air selon la revendication 1 caractérisée en cela que les points d'appui (6) sont situées à l'intérieur du boîtier (1) et sont orientés de manière axiale vers l'axe longitudinale médian du boîtier (1).

6. Buse d'air selon la revendication 5 caractérisée en cela que sur le boîtier (1) et sur l'insert (4), il se trouve respectivement des découpes (8) de forme partiellement sphérique qui sont congruentes ensemble ou que l'insert (4) présente sur sa surface extérieure une découpe en forme d'anneau avec une surface sphérique (5).

7. Buse d'air selon la revendication 6 caractérisée en cela que dans la zone de transition des découpes partiellement sphériques (8) du boîtier (1) et de l'insert (4), il y a au moins un élément à ressort (7).

8. Buse d'air selon la revendication 1 caractérisée en cela que l'insert (4) sur sa surface extérieure présente une surface sphérique (5) dont la taille correspond environ aux trois-quarts d'une bille.

9. Buse d'air selon la revendication 1 caractérisée en cela que l'insert (4) présente sur son extrémité orientée vers l'ouverture du sortie d'air (2) et/ou sur l'ouverture d'entrée d'air (3) une collerette cylindrique (9).

10. Buse d'air selon la revendication 1 caractérisée en cela que l'insert (4) présente un grand nombre de canaux de circulation (10) séparés et situés respectivement dans la direction longitudinale de l'insert (4).

11. Buse d'air selon la revendication 1 caractérisée en cela que l'insert (4) présente un canal de circulation (11) enroulé en forme de spiral autour de son axe longitudinal.
